(19) Europäisches Patentamt
European Patent Office
Office européen des brevets

(11) **EP 2 310 318 B1**

(12) **EUROPEAN PATENT SPECIFICATION**

(45) Date of publication and mention
of the grant of the patent:
**02.10.2019  Bulletin 2019/40**

(21) Application number: **09786846.7**

(22) Date of filing: **07.08.2009**

(51) Int Cl.:
*C08K 3/26* *(2006.01)*        *C01B 33/44* *(2006.01)*
*C08J 5/18* *(2006.01)*

(86) International application number:
**PCT/IB2009/053458**

(87) International publication number:
**WO 2010/016034 (11.02.2010 Gazette 2010/06)**

(54) **POLYMERIC MATERIALS FOR ACTIVE FOOD PACKAGINGS**

POLYMERE MATERIALIEN FÜR AKTIVE LEBENSMITTELVERPACKUNGEN

MATÉRIAUX POLYMÈRES POUR DES CONDITIONNEMENTS D'ACTIFS D'ALIMENT CAPABLES DE PROTÉGER ET D'AMÉLIORER LA QUALITÉ DES PRODUITS ALIMENTAIRES CONTENUS ET DE RÉDUIRE LEURS TRAITEMENTS DE CONSERVATION

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **08.08.2008  IT SA20080024**

(43) Date of publication of application:
**20.04.2011  Bulletin 2011/16**

(73) Proprietor: **Nice Filler S.r.l.**
**84084 Fisciano (SA) (IT)**

(72) Inventors:
• **VITTORIA, Vittoria**
  **I-80110 Napoli - NA (IT)**
• **SORRENTINO, Andrea**
  **I-80036 Palma Campania - NA (IT)**
• **GORRASI, Giuliana**
  **I-84080 Capezzano di Pellezzano - SA (IT)**
• **TAMMARO, Loredana**
  **I-84090 San Cipriano Picentino - SA (IT)**
• **BUGATTI, Valeria**
  **I-84085 Mercato San Severino - SA (IT)**
• **COSTANTINO, Umberto**
  **I-06127 Perugia - PG (IT)**
• **NOCCHETTI, Morena**
  **I-06134 Ponte Valleceppi - PG (IT)**

(74) Representative: **Germinario, Claudio et al**
**Società Italiana Brevetti S.p.A.**
**Piazza di Pietra, 38-39**
**00186 Roma (IT)**

(56) References cited:
EP-A- 0 846 660          EP-A- 0 846 662
WO-A-03/106549          WO-A-2004/098574
WO-A-2006/030075        WO-A-2006/114385
WO-A1-2007/074184       WO-A2-2007/010584
US-A1- 2005 244 439

**Description**

Field of the invention

The present invention relates to the use of polymeric materials in active packagings for food products, able to reduce the sterilization treatments both in terms of temperatures and exposition time, to prolong the shelf life of the contained food products, and to limit each type of deterioration and/or degradation.

Known art

In the packaging field, in particular in the field of packaging food substances, succeeding in modulating the activation of the degradative processes which are on the basis of the shelf life of the food products can be very useful. In this context the so-called active packagings result to be extremely useful, which carry substances able to move the passive protection offered by the packaging materials to a targeted intervention and more effective therefore. The protective action is expressed by controlling chemical, microbiologic, enzymatic, chemical-physical, mechanical phenomena. The adoption of active/intelligent solutions allows then to transfer, from the process operation to the conditioning process, some important functions relating the quality maintenance and the minimization of the damages brought by the transformation/conditioning technologies.

The protective action is expressed by controlling the concentration of different volatiles and gases in the top space of the packaging of food products or directly with the product contained therein, by means of releasing substances useful for improving the quality thereof or through the sequester of unwished substances.

Among the commercially available solutions of active packaging, the oxygen absorbers, the humidity absorbers, the humidity adjusters, the $CO_2$ absorbers, the ethylene absorbers, the ethanol emitters and the $CO_2$ emitters are to be pointed out.

These substances are generally commercialized in small bags to be inserted directly in the packaging or incorporated in the polymer matrix of the packaging material.

The solutions of ""active packaging" able to release inside the packaging substances useful for a better preservation or presentation or maintenance of the organoleptic qualities are less numerous and definitely more problematic. Solutions able to release antimicrobics, aromatic substances and even dyes are available.

One of the main limits of these systems is the reduced capability of guaranteeing an adequate release of the substance in time.

Release systems are known, constituted by polymer matrixes added with active principles (US 5466462) and, in case, containing inorganic compounds (WO 2004/098574). The limit of such systems is the extreme speed at which the active principle is released by the matrix and the difficulty of modulating this parameter.

In particular WO 2004/098574 provides that powders of inorganic solids, with sizes of nanoparticles of various nature which can be lamellar and not lamellar, are added to the polymer. The process for adding the inorganic is not described as critical and, in case of extrusion, it provides a simple mixing together of the several components. Furthermore, in the example reported in WO 2004/098574 it is specified that the powders are not subjected to any preventive treatment and the three components (PEG polymer, inorganic Cloisite and the Paracetamol active principle) are mixed all together, the resulting system is characterized by an almost total release of the active principle in an extremely short time (60 min).

It is known that some lamellar solids are able to absorb and release active principles (AAPS Pharm. Sci. Tech. 2002; 3 (3) art. 26), but unfortunately, showing themselves in the form of finely divided microcrystalline or amorphous powders, do not have the suitable features to assume well-determined solid forms (membranes, films, etc.). Furthermore, the release rates of the active principle are very short, in the order of 24 hours, or less (100 min. as reported in Int. J. of Pharmaceutics 220 (2001) 23-32).

The need was felt to have a release system able to release the active principle contained therein with rates even longer than 24 hours, in case also longer than 5 days, and to have, if possible, a release modulated in time.

Summary of the invention

An object of the invention is the use of a polymeric material in active packaging for food products as in claim 1. Such packaging contain active principles, dispersed in the matrix thereof, able to reduce the sterilization processes both in terms of temperatures and time, to prolong the shelf life of the contained food products and to limit each type of deterioration and/or degradation. The polymeric material comprises: (i) a polymer matrix; (ii) an inorganic component dispersed inside said matrix and characterized by a lamellar structure with neutralized net positive or negative charge able to intercalate within said lamellar structure an active principle. In this way a compound formed by a lamellar inorganic solid and the active principle is obtained.

Typically the polymeric material comprises about 50-99% by weight of polymer (i), preferably about 50-80% or 60-90%, more preferably about 80-90% or 80-99%; the inorganic component (ii) containing the active principle intercalated and/or absorbed on the surface is present in quantities ranging between about 1-50% by weight, preferably about 50-20% or 10-40%, more preferably about 10-20% or 20-1%.

Preferably, the quantity of active principle compared to the inorganic component is given by the following expression:

$$\text{Loading (g/g)} = \alpha \times PM/(PF + \alpha \times PM)$$

wherein $\alpha$ is the intercalation rate, defined as the number of moles of active principle intercalated and/or absorbed by 1 mol of inorganic component, PM is the molecular weight (g/mol) of the active principle, PF is the formula weight (g/mol) of the inorganic component not comprising the active molecule.

Preferably the active principle (iii) is present in quantities ranging between about 1-50% by weight, more preferably about 20-50%, still more preferably about 40-50% with respect to the inorganic component. Obviously, this % is linked to the molecular weight of the active molecule.

Another object of the description is a system for the organized fixing in at least two or more overlapped layers, wherein the single layers comprise the same intercalation compound with the same active principle or intercalation compounds and active principles different there between.

Another object of the description is the process for preparing the fixing/dispersing system, comprising the stages of: treating the lamellar solid so as to confer thereto a net positive or negative charge, then to combine it with the chosen active principle, in the ionic form too or transformed so as to confer thereto a ionic nature, thus obtaining a pre-mixture or intercalation compound or more generally an active inorganic hybrid material-active principle, which will be then mixed with the chosen polymer matrix. Preferably, the intercalation compound comprises 1-50% by weight of active principle with respect to the solid, preferably 20-50% or 10-50%, more preferably 20-40% or 40-50%, even if the shown quantities are only indicative and strictly depending on the molecular weight of the active molecule, the nature of the active principle and of the inorganic component and on the intercalation rate and the use of the system.

Still another object is the use of the polymeric material according to the invention to implement films for packaging food products in the liquid, solid or semi-solid form.

Still another object of this description is the manufactured products implemented with the polymeric material, such as for example bottles, basins, bags, multi-layered manufactured products, etc. The manufactured products implemented with the polymeric material of the description are also characterized by mechanical properties optimized depending upon the end use.

Still another object of this description is the manufactured products implemented or coated with a single or multi-layered coating with the polymeric material according to the description.

Additional objects will be evident from the following detailed description of the invention.

Brief description of the figures

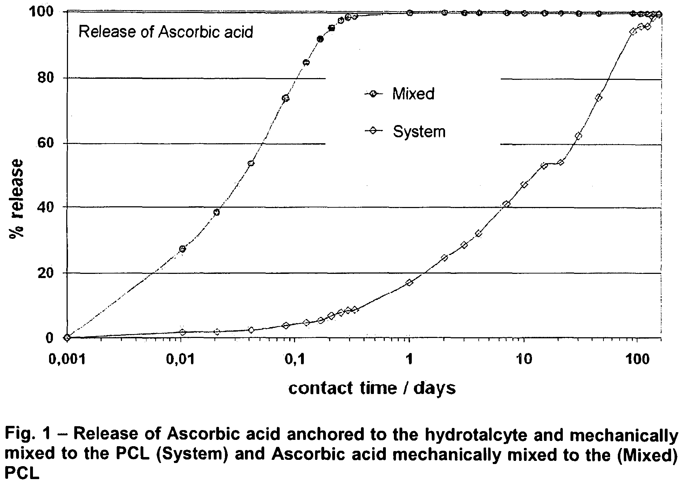

Figure 1: Release kinetics. Comparison between the release of the Ascorbic acid molecule incorporated directly in the only polycaprolactone polymer and the release of the same in the system of the description, wherein the matrix is polycaprolactone wherein the hydrotalcyte inorganic compound is dispersed, on the molecules thereof the Ascorbic acid molecule is anchored.

Such kinetics demonstrates that, if the packaging has to contain aqueous food products the active principle (however allowed by the law by contact with food products) will be released much slower and therefore in fewer quantities, the time being equal.

Detailed description of the invention

In the scope of the present invention the following definitions will be used with the following meanings:

Biodegradable: it is a compound or product or material which can be used in food applications which has the feature of being able to be assimilated by the microrganisms and to be thus entered in the natural cycles;

Biocompatible: it is a compound or product or material which can be used in food and medical applications, the biocompatibility being able to be obtained also with a surface treatment of a material, not biocompatible on itself;

Antimicrobial: substance which inhibits the growth of bacteria, moulds and fungi;

3

Antioxidant: substances used to reduce the deterioration of the food products caused by the contact with the air oxygen;

Lamellar solid is an inorganic compound not containing organic carbon which, for the chemical structure thereof, forms a solid which arranges spatially like a sequence of lamellae, that is crystals having a much smaller size than the other two (see chapter 1 of Volume VII of Comprehensive Supramolecular Chemistry, Pergamon Press, Oxford, 1996). If the lamellae bear a (positive or negative) electric charge, ions of opposite charge position inside the galleries between the lamellae, to protect the solid electric neutrality. Such ions can be replaced by active molecules in ionic form, through ionic exchange reactions;

Intercalation compound is the material obtained after the insertion (intercalation) of molecules or atomic or molecular ions in the interlamellar region of lamellar solids;

Intercalation site is the inorganic site wherein there is the net charge (positive or negative depending upon the inorganic type), which will be neutralized by the active molecule in ionic form;

Active principle is any substance having effects useful in the preservation and protection of the food products;

Polymer matrix is a polymeric solid which can derive from a single or mixture of, in case partially or wholly cross-linked, homo-or copolymers wherein another component is dispersed.
The anchoring and release system according to the description is characterized in that molecules of active principles are fixed to the lamellae of an inorganic lamellar solid through ionic bonds, and the lamellar solid/active principle resulting system, also called intercalation compound, is then incorporated in a polymer matrix.

Anchoring and release system is a system wherein the active molecule has been fixed with ionic bond onto the inorganic compound and it can be released in a specific environment.

Polymers which can be advantageously used according to the invention are the synthetic or natural biodegradable or biocompatible synthetic polvmers. Some examples of classes of polymers which can be used are the following: polyolefins, polyethylen glycols, polycaprolactones and polyesters, polyactides, polyanhydrides, polyvinylpyrrolidones, polyurethanes, polysiloxanes, polyaminoacids, polyacrylates and polymethacrylates, polyamides, polyimides, polyanilines, polyacrylonitriles, silicons, polyether-ketones, polyether-ether-ketones, high and low density polyethylenes, polypropylenes, polystyrenes; natural polymers like polysaccharides in general, amides, celluloses, chitins, chitosans, pectins, gelatins, proteins, polypeptides; taken individually or in a mixture thereof, possibly functionalised and possibly partly or totally crosslinked, in case added with additives like: stabilizers, plasticizers; the whole within the knowledge of the person skilled in the art.
It was noted that the incorporation of the intercalation compound in the polymer matrix improves the mechanical (for example elastic module and rupture energy), thermal (for example, increase in the vitreous transition temperature and the thermal degradation temperature of the polymer) properties thereof and the permeability to gas liquids and vapours, thus allowing to implement and process manufactured products having a high mechanical module and a good toughness.
The polymeric material for use according to the invention is able to fix and release active molecules, such as antimycotics, antioxidants, antimicrobics and it can be modulated in a wide range, both as far as the quantities of anchored molecules are concerned as well as far as those released with variable time are concerned.
Furthermore, the fixing method, through ionic bonds, allows the release of the active molecules only through ionic exchange reactions, the kinetics thereof depends upon the concentration of ionic bonds, upon the type of counter ion in solution, upon the ionic force of the solution, upon the pH, upon the temperature. Therefore, it is a system for fixing active molecules which, if needed, can be released but only in presence of particular interactive environments. The release can then be modulated in a wide range of situations and it can be adapted to specific requirements. It can be used above all in packaging of solid, half-solid or liquid food products.
The choice of the active molecule depends upon the application, being able to range between antimicrobics, antioxidants and antimycotics.
Some among the possible molecules or active principles which can be used according to the invention are reported as follows:

**Antimicrobic preservatives. E200-E299**

- E200 Sorbic acid (preservative)

- E201 Sodium sorbate (preservative)

- E202 Potassium sorbate (preservative)

- E203 Calcium sorbate (preservative)

- E214 Ethyl para-hydroxibenzoate (preservative)

- E215 Ethyl para-hydroxibenzoate sodium salt ("etilparaben") (preservative)

- E216 Propyl para-hydroxibenzoate (preservative)

- E217 Propyl para-hydroxibenzoate sodium salt ("propilparaben") (preservative)

- E218 Methyl para-hydroxibenzoate (preservative)

- E219 Methyl para-hydroxibenzoate sodium salt ("metilparaben") (preservative)

- E231 Orthophenyl phenol (preservative)

- E232 Orthophenyl phenol sodium salt (preservative)

- E233 Thiabendazole (preservative)

- E234 Nisin (preservative)

- E235 Natamicyn, Pimaracin (preservative)

- E236 Formic acid (preservative)

- E237 Sodium formate (preservative)

- E238 Calcium formate (preservative)

- E239 Hexametylene tetramine, examine (preservative)

- E242 Dimetyl dicarbonate (preservative)

- E249 Potassium nitrite (preservative)

- E260 Acetic acid (preservative)

- E261 Potassium acetate (preservative)

- E262 Socium acetate and sodium diacetate (preservative)

- E263 Calcium acetate (preservative)

- E264 Ammonium acetate (preservative)

- E270 Lactic acid (preservative) (acid) (antioxidant)

- E280 Propionic acid (preservative)

- E281 Sodium propionate (preservative)

- E282 Calcium propionate (preservative)

- E283 Potassium propionate (preservative)

- E284 Boric acid (preservative)

- E285 Borax, sodium tetraborate (preservative)

**Antioxidants: E300-E399**

- E300 Ascorbic acid (Vitamin C) (antioxidant)

- E301 Sodium ascorbate (antioxidant)

- E302 Calcium ascorbate (antioxidant)

- E303 Potassium ascorbate (antioxidant)

- E304 Fatty acid esters of ascorbic acid (i) Ascorbyl palmitate (ii) Ascorbyl stearate (antioxidant)

- E306 Tocopherol-rich natural extracts (antioxidant)

- E307 $\alpha$-tocopherol (synthetic) (antioxidant)

- E308 $\gamma$-tocopherol (synthetic) (antioxidant)

- E309 $\delta$-tocopherol (synthetic) (antioxidant)

- E310 Propyl gallate (antioxidant)

- E311 Octyl gallate (antioxidant)

- E312 Dodecyl gallate (antioxidant)

- E315 Erythorbic acid (antioxidant)

- E316 Sodium erythorbate (antioxidant)

- E320 Butylated hydroxyanisole (BHA) (antioxidant)

- E321 Butylated hydroxytoluene (BHT) (antioxidant)

- E325 Sodium lactate (antioxidant)

- E326 Potassium lactate (antioxidant)

- E327 Calcium lactate (antioxidant)

- E329 Magnesium lactate (antioxidant)

- E330 Citric acid (antioxidant)

- E331 Sodium citrates: (i) Monosodium citrate (ii) Disodium citrate (iii) Trisodium citrate (antioxidant)

- E332 Potassium citrates: (i) Monopotassium citrate (ii) Tripotassium citrate (antioxidant)

- E334Tartaric acid (L(+)-) (acid) (antioxidant)

- E335 Sodium tartrates: (i) Monosodium tartrate (ii) Disodium tartrate (antioxidant)

- E336 Potassium tartrates: (i) Monopotassium tartrate (creme of tartar) (ii) Dipotassium tartrate (antioxidant)

- E337 Sodium and potassium tartrate (antioxidant)

- E338 Phosphoric acid (antioxidant)

- E339 Sodium phosphates: (i) Monosodium phosphate (ii) Disodium phosphate (iii) Trisodium phosphate (antioxidant)

- E340 Potassium phosphates: (i) Monopotassium phosphate (ii) Dipotassium phosphate (iii) Tripotassium phosphate (antioxidant)

- LIPOIC ACID

- SULPHUROUS AMINOACIDS (cystine, methionine, cysteine, taurine, cisteic acid).

- BETACAROTENE or provitamin A (carotenoid)

- BIOFLAVONOIDS

- COENZYME Q10

- E.D.T.A. (ethyl diamino tetracetic acid)

- GLUTATHIONE

- LYCOPENE (carotenoid)

- LUTEINA (carotenoid)

- MELATONIN

- METHIONINE

- MSM

- NAC o N-Acetyl-Cysteine

- PICNOGENOLE

- POTASSIUM

- COPPER

- RESVETRALOLE

- SELENIUM

- VITAMIN A.

- VITAMIN C

- VITAMIN E

- ZEAXANTHIN

- ZINC

- CHLOROPHYLL

- ANTHOCYANIN

- LYCOPENE

**Antimycotics**

- METRONIDAZOL (BENZOATE)

- DOXYCYCLINE

- ACICLOVIR

- FAMCICLOVIR

- METISOPRINOLE

- VALACICLOVIR (HYDROCHLORIDE)

Among the lamellar inorganic solids equipped with intercalation properties (see chapter 1 of Volume VII of Comprehensive Supramolecular Chemistry, Pergamon Press, Oxford, 1996) to the effects of the invention, only those with charge of the negative lamella, counterbalanced by cations inserted in the interlamellar region (the so-called cationic lamellar solids) and those with positive charge, counterbalanced by anions inserted in the interlayer region (the so-called anionic lamellar solids)

(interlamellar and interlayer are to be considered synonymous) will be taken into account. Among the first ones the cationic clays (montmorillonite, vermiculite, fluoroectorite, bentonite) and the zirconium or titanium phosphates, which are able to intercalate, by means of a cationic exchange process, active principles containing in the molecule a site which can be converted into cation, generally an aminic site able to provide a quaternar ammonium cation, can be mentioned in a not limitative way. Among the second ones the synthetic hydrotalcytes are to be considered, also known with the name of anionic clays or double lamellar hydroxides (as referred to two cations existing in the layer, form example $Mg_6Al_2(OH)_{16}CO_3$, which can intercalate, by means of an anionic exchange process, active principles with sites which can provide anions, typically carboxyl, phenolic, sulfonic, phosphonic groups. Matrixes of election by intercalation of drugs of anionic type are the synthetic hydrotalcytes of Mg - Al or Zn - Al type with a molar ration Mg(Zn)/Al varying from 1.5 to 4 and with an anionic exchange capability varying from 2 to 5 mequiv/g.

In case of hydrotalcytes the lamellar solid is derived from the $Mg(OH)_2$ by substitution Mg/Al, which creates an excess of positive charge, compensated by anions existing in the galleries (for example $Cl^-$ o $NO_3^-$). The charge depends upon the extension of the substitution Mg/Al and it is expressed as charge density which determines the anionic exchange capability (mequiv/g). The general formula of the synthetic hydrotalcytes or double lamellar hydroxides can be written as general formula (I):

$$[M(II)_{1-x}M(III)_x(OH)_2]^{x+}[A^{n-}_{x/n}]^{x-}.mS \qquad (I)$$

wherein M(II) is a metal of valence (II) preferably chosen among Mg, Zn, Co, Ni, Mn, Cu.; M(III) is a metal of valence (III) preferably chosen among Al, Cr, Fe, V, Co; $A^{n-}$ is an anion with negative charge n, which compensates the charge and it is preferably chosen among $Cl^-$, $NO_3^-$, $CO_3^{--}$, $SO_4^-$, organic anions; m is the number of molecules of the co-intercalated solvent (S), generally water, by formula weight of the compound. The number of moles x of the cation M(III) by formula weight of the compound generally varies from 0.2 to 0.40 and its value determines the charge density of the layer and the anionic exchange capability. The number of moles of co-intercalated solvent, m, usually ranges from 0 to 2, depending upon the nature of A and upon the intercalation rate (for example 0.6 $H_2O$). Hydrotalcyte compounds - similar systems wherein, in the range of the considered x, there are several bivalent cations (for example Mg and Cu) or several trivalent cations (for example Al and Cr), are always considered. Moreover, to the effect of the present invention, the double hydroxide of formula $Al_2Li(OH)_2A^{n-}_{1/n}$. is considered lamellar inorganic component.

The anions existing in the galleries can be replaced, through ionic exchange reactions, by organic molecules having a negative charge (for example, carboxylates, sulfonates, phosphonates).

It was surprisingly found that when the intercalation compound is dispersed at micro-or nano-meter level in the polymer matrix the release kinetics of the active molecule, under the conditions described by the "FUI Farmacopea Ufficiale Italiana" ("Italian Official Pharmacopeia"), is very slowed down compared to that of the molecule incorporated alone directly in the matrix, and furthermore - in our case - it is released only if in contact with an aqueous solution containing anions which allow the ionic exchange. In fact, it is believed that the release process requests the scattering of the active principle in ionic form from the lamellar solid to the polymer matrix and from the latter outwards, with a contemporary backscattering of ions with the same sign which from outside scatter in the polymer and exchange with the active principle. This concerted mechanism is regulated by several parameters (temperature, concentration and nature of the ions which replaces the active molecule, dispersion of the intercalation compound in the polymer, its concentration, nature of the molecule and of the polymer) the control thereof allows to vary the anchoring speed, until annulling it if necessary.

The method for preparing the release system is a multi-stage process providing the preparation of a pre-mixture comprising the lamellar inorganic solid and the active principle. The pre-mixture, preferably in form of micro- and nano-particles, is then mixed with the polymer matrix according to the known arts.

The preparation of the pre-mixture or inorganic lamellar solid hybrid material/active principle comprises the stage of anchoring the molecules of the active principle to the inorganic solid with lamellar structure, usually by means of a ionic exchange reaction, which allows entering the chosen active principle in the galleries of the inorganic lamellar solid (molecule - inorganic solid complex, also designated as intercalation compound). The process is performed according to known procedures, as described for example in AAPS Pharm. Sci. Tech. 2002; 3 (3) art. 26, which involve the dispersion of the powder of the chosen lamellar solid in a solution containing the active principle in ionic form. The exchange usually takes place under stirring of the solution at the chosen temperature and by using volumes of solution and concentrations suitable to obtain the partial or total exchange of the ions existing in the starting solid with the active principle. An example of preparation of an intercalation compound for use according to the invention is described in the Example 1. The state of art provides that lamellar solid/active principle complexes wherein the lamellar solid is synthetic hydrotalcyte, can be obtained also with the procedures known with the terms direct precipitation, that is precipitation of the double hydroxides in presence of the active principle in anionic form, and reconstruction of the lamellar structure starting from the mixed oxides in an aqueous solution containing the active principle (see: F. Cavani, F. Trifirò, A. Vaccari, Catal. Today, 11(1991)173).

The intercalation compound can be characterized by thermogravimetry measures, providing the quantity of residual inorganic after the thermal degradation at 800°C. By difference the quantity of active principle existing in the mixture is obtained; diffractomectric analysis with X rays, providing the evidence of intercalation of the active molecule.

The choice of the inorganic solid is made in function of the polymer matrix and above all the type of active molecule. Once having chosen the organic molecule, the parameters which could be varied are:

1. Type of lamellar inorganic solid. Solids with negative charge of the lamellae (smectic clays, lamellar Zr(Ti) phosphates) will be used for active principles of cationic type, solids with positive charge of the lamellae (natural or synthetic hydrotalcytes) will be used for anionic active principles. Both types of solid are in form of microcrystalline powder with sizes which typically can vary in the range of about 0.01-100 $\mu$m or 1-50 $\mu$m, preferably 0.1-10 $\mu$m or 30-50 $\mu$m.

2. Charge density. This parameter is interesting in particular for the synthetic hydrotalcytes which can be synthesized according to the state of art with different ratio M(III)/M(II) and therefore with different charge density followed by a different loading of active principle (from 2 to 5 or 2 to 4 mmol/g) and of the inorganic solid, allowing a loading which can be modulated. The different ratio M(III)/M(II) is obtained by varying the stoechiometry of the reaction for preparing the hydrotalcyte. As already described, the insertion, upon the synthesis of the trivalent cation in the lamella determines a positive charge excess (each trivalent cation confers a positive elementary charge) which must be balanced by anions existing in the interlamellar region, preferably to the effects of the invention the anions are active principles. The charge density can be varied by varying the parameter x in the already reported general formula (I). The different charge density determines a different loading in active principle if a maximum intercalation rate is considered. It is measured by making an elementary analysis of magnesium and aluminium. Since the ratio M(III)/M(II) determines the positive charge of the inorganic lamellae and since the ratio can vary, the quantity of ions with opposite charge must consequently vary. This makes possible to modulate the quantity of active molecule, and the re-chargeable maximum will correspond to the maximum replacement of the counter-ions.

3. Extension of the ionic exchange reaction which involves a different exchange percentage and different loading of active principle. That it, is it possible to exchange only partially the anions already existing in the lamellar solid with the active principle. For example, if the charge on the lamella is of 0.37 moles per total mole, the active molecule could be charged up to a maximum of 0.37, being able to stop at lower values (for example 0.20 moles per total mole).

Once prepared the intercalation compound, this is incorporated in the chosen polymer matrix. Said polymer matrix could be biodegradable or non biodegradable, depending upon the use and it could also be a copolymer or a mixture of polymers and/or copolymers, as shown previously.

The parameters to keep in consideration in the preparation of the anchoring and release system controlled are:

a) Type of polymeric system

b) Concentration of the intercalation compound in the polymer matrix. Such concentration can advantageously vary from 0.1% to 40% in inorganic weight, containing the active molecule.

c) Type of incorporation process, the conditions thereof are chosen by the person skilled in the art according to his/her knowledge:

- from solvent, by casting;

- from the fuse, by pressure die casting or extrusion;

- from ball milling (mixing in a mill with rigid spheres);

- from sonication

(Ref. Michael Alexandre, Philippe Dubois Materials Science and Engineering, 28 (2000) 1-63; Sorrentino, Andrea; Gorrasi, Giuliana; Tortora, Mariarosaria; Vittoria, Vittoria; Costantino, Umberto; et. al. Polymer Volume: 46 (2005) pages 1601-1608)

Once obtained the release system, this can be subjected to subsequent processing to obtain the manufactured products thereof for the end use. Some techniques and the end manufactured products are shown by way of example and they are within the comprehension of the person skilled in the art:

- compact or porous films and membranes can be obtained by pressure die casting or by casting from solvent;

- specific manufactured products, with pre-established shape, can be obtained by injection moulding in the specific shape or turned like screws;

- multi-layered manufactured products.

The parameters, thereupon the release kinetics of the active molecules depend, can be modulated and controlled in a wide range and with the indications given in the text and with his/her own knowledge, the person skilled in the art is able to find the most suitable conditions to implement the invention. Generally, the aspects to be evaluated are:

- Type of active molecule;

- Type of inorganic material thereon the active molecule is anchored, through strong (ionic) or weak bonds;

- Type of polymer matrix, comprising homopolymers, copolymers or mixtures;

- Concentration of the active molecule anchored to the inorganic compound;

- Concentration of the complex (active molecule-inorganic) in the polymer matrix;

- Type of processing of the (compact or porous) manufactured product.

Therefore, it is clear that by properly choosing and controlling the illustrated parameters it is possible producing manufactured products suitable for several applications in the field of the active food product packagings.

Furthermore, according to the percentages of the lamellar solid existing therein, the system described here acquires unexpected mechanical properties (increase in the resistance to compression, to temperature, to traction, increase in the capability of modelling in even complex shapes). The increased physical features also allow to obtain manufactured products with concentric layers able, based upon the surface and thickness thereof and concentration in lamellar solids, to anchor and to allow the release for different time.

Example 1

Solid urea was added to 0.5 mol/dm$^3$ of a solution of metal chlorides, having a molar fraction M(III)/ [M(III) + M(II)] equal to 0.33, until when the urea/[M(II) + M(III)] molar ratio reached the value 3.3. The limpid solution was heated, under stirring, at temperatures between 60 and 100°C. All the gathered materials shown diffractograms of X Rays typical of compounds belonging to the family of Hydrotalcytes (HTIc), the general formula thereof can be written as

$$[M(II)_{1-x}M(III)_x(OH)_2]^{x+}[N^{n-}{}_{x/n}]^{x-}.mS$$

wherein M(II) can be Mg, Zn, Co, Ni, Mn etc.; M(III) can be Al, Cr, Fe, V, Co, etc.; A$^{n-}$ is the anion compensating the charge and can be Cl$^-$, NO$_3^-$, CO$_3^{--}$, SO$_4^-$, organic anions, etc.; m is the number of molecules of co-intercalated solvent (S), by formula weight of the compound. The number of moles x of the cation M(III) by formula weight of the compound generally varies from 0.2 and 0.33 and the value thereof determines the charge density of the layer.
In case of the present example we obtained a formula compound:

$$[Zn_{0.65}Al_{0.35}(OH)_2](CO_3)_{0.175}0.5H_2O$$

Determined through elementary analysis (Sample A).
The sample A was titrated with HCl 1 M in solution of NaCl 1 M. The suspension was titrated in a pHstat and kept under stirring for 24 hours. Subsequently, it was centrifuged and the humid solid was washed three times with distilled water and dried in stove. The crystalline solid was analyzed at X Rays for controlling the performed exchange between carbonate and chloride. The elementary analysis demonstrated to obtain the compound (Sample B):

$$[Zn_{0.65}Al_{0.35}(OH)_2]Cl_{0.35}0.6H_2O$$

In order to obtain the nitrate form the sample B was suspended in a solution 0.5 M of NaNO$_3$ for 24 hours. The recovered solid was washed three times with decarbonated deionised water and dried on a solution saturated with NaCl (related humidity, R.H., 75%). The obtained compound has formula [Zn$_{0.65}$Al$_{0.35}$(OH)$_2$] (NO$_3$)$_{0.35}$×0.6H$_2$O (Sample C).

Example 2

The intercalation of the benzoate molecule in the hydrotalcyte in carbonate form was obtained by treating the nitrate form of the hydrotalcyte with an aqueous solution of the anion 0.5 M (organic anion/NO$_3^-$ molar ration=3) for 24 hours at room temperature. The recovered solid was washed three times with demonized and decarbonated water and dried at R.H. 75%. The compound of formula (sample D): [Zn$_{0.69}$Al$_{0.31}$(OH)$_2$](C$_7$H$_5$O$_2$)$_{0.31}$*1H$_2$O (LDH) (P.M.$_{totale}$= 142.99, the BZ thereof is 26.2%.

Example 3

The organic molecule with antimicrobic functions, inserted inside the polymer matrix constituted by the polyprolactone (PCL) (Mw= 50000, Tm=60°C) biodegradable and biocompatible polymer, is the benzoate (BZ) C$_7$H$_5$O$_2$ (P.M.= 121) which is anchored through ionic bonds to the hydrotalcyte [Zn$_{0.69}$Al$_{0.31}$(OH)$_2$](C$_7$H$_5$O$_2$)$_{0.31}$*1H$_2$O (LDH) (total M.W.= 142.99, the Benzoate (BZ) thereof is 26.2%)
The compound LDH-BZ prepared at the University in Perugia, was mixed to the polymer through the High Energy Ball Milling (HEBM) technique; this technique provides repeated events of transferring mechanical energy from a milling system constituted by 5 steel small balls to the material to be milled, system which for 1h at a maximum rate of 580g/s generates the chemical energy necessary to the reaction between the polymer and the hydrotalcyte. During the milling the powder particles break, smooth surfaces form, the atoms scatter and bond. The milling could break the polymer chains, by lowering the molecular weight thereof and producing oxidizing phenomena.
The BZ hydrotalcyte, perfectly dried for one night in vacuum stove at 80-100°C, is mixed to the PCL in different %: total 3g of mixtures with 3%, 4.8% and 9% by weight are prepared;
3%: 2.91g of PCL + 90mg of LDH-Bz
5%: 2.856g of PCL + 0.144g of LDH-Bz (Sample E)
9%: 2.727g of PCL + 0.273g of LDH-Bz
Also a mixture corresponding to the 4.8% one, but only with the organic molecule PCL-Bz with 2.856g of PCL + 42mg of Bz will be prepared (Bz is 26.2 % on LDH-Bz and therefore it will be 1.5% on the total).

Of each mixture 0.5g thereof are taken before the milling process and mechanical mixtures are prepared by simple mixing in a mortar to compare the different techniques. The composite powders are pressure die cast, at T=80-90°C and the obtained films poured in water/ice, producing homogeneous films with thickness of 0.1 mm whereas the mechanical mixtures by pressure die casting produced dishomogeneous films with visible portions of inorganic not perfectly mixed to the polymer.

Example 4

In order to perform the release tests, a sample of PCL with 1.4% of Benzoate, not anchored to the hydrotalcyte (Sample F) was prepared by comparison. From the samples E (PCL with 5% of Hydrotalcyte containing Benzoate) and F (PCL containing 1.4% of Benzoate) two homogeneous small circles weighing, respectively, 35.32 mg and 33.28 mg, were cut. It is important noting that the percentage concentrations of benzoate in the two samples are equal (1.4%). The two samples were dipped in 25 mL of physiological solution and, at determined time, the liquid in contact with the sample was put in a spectrophotometer UV (2401Pc Shimadzu) and the absorbance was determined, corresponding to the absorption band of the Benzoate molecule. The Absorbance is proportional to the concentration of the active molecule, according to the formula:

$$A = \varepsilon\, c\, l$$

wherein c is the concentration, $\varepsilon$ and l are constant. The increase in absorbance can be then put directly in relation to the increase in the Benzoate concentration which passes from the polymer solid matrix into the physiological solution.

The Figure shows the courses of the released percentage for the sample F (PCL with Benzoate), and E (PCL with Hydrotalcyte and benzoate). In the sample F, at 192 hours, the release of active principle of 90% was obtained, whereas in the sample E the release of 44.8% was obtained.

From the figure it can be noted that, when the active molecule is not anchored to the Hydrotalcyte, it goes out quickly, completing after 200 hours in contact with the solution, whereas the outgoing in the second case is much slower. Still the figure shows for the invention system a first quick release stage, ending too at approximately 72 hours, and a second slow stage which continues with a release linear with time. This two-stage effect, generally existing in the invention release system, constitutes an additional effect of great interest, as it allows an initial peak at time of the greatest need of the active principle and a gradual subsequent maintenance release.

An additional important phenomenon was noted which constitutes an additional advantage of the system described herein and that is, the anchoring of the active molecule on the inorganic lamellar compound allows a slower release: this makes the invention system much more efficient.

**Claims**

1. Use of a polymeric material comprising i) a polymer matrix; (ii) an inorganic component dispersed inside said matrix and **characterized by** a lamellar structure with a neutralized net positive or negative charge able to intercalate within said lamellar structure an active principle (iii),

   said active principle establishing an ionic type bond with the inorganic component, the combination of the inorganic component (ii) and of the active principle (iii) constituting an intercalation compound and
   said inorganic component consisting of synthetic hydrotalcytes of the Mg-Al or Zn-Al type with a molar ratio Mg(Zn)/Al which varies from 1.5 to 4 and with an anionic exchange capacity which varies from 2 to 5 mequiv/g

   in food packaging field, in particular in active food packaging.

2. Use according to claim 1, wherein the polymer matrix comprises at least one among the synthetic, biodegradable or biocompatible, synthetic or natural polymers belonging to the following classes: polyethylene glycols, polycaprolactones and polyesters, polylactides, polyanhydrides, polyvinylpyrrolidones, polyurethanes, polysiloxanes, polyamminoacids, polyacrylates and polymethacrylates, polyamides, polyimides, polyanilines, polyacrylonitriles, silicons, polyether-ketones, polyether-ether-ketones, high and low density polyethylenes, polypropylenes, polystyrenes; natural polymers like polysaccharides in general, amides, celluloses, chitins, chitosans, pectins, gelatins; taken individually or in a mixture thereof, possibly functionalised and possibly partly or totally crosslinked.

3. Use according to claim 1 or 2, wherein in said polymeric material contains 50-99% by weight of polymer matrix and 1-50% by weight of inorganic component..

4. Use according to at least one of the preceding claims, wherein said synthetic hydrotalcyte is in form of microcrystalline powder with sizes in the range of about 0.01-100 $\mu$m.

5. Use according to at least one of the preceding claims, wherein said active principle is chosen among drugs of anionic type.

6. Use according to claim 5, wherein the quantity of said active principle (iii), compared to the inorganic component verifies the following expression:

$$\text{Loading (g/g)} = \alpha \times PM / ( PF + \alpha \times PM)$$

where $\alpha$ is the intercalation rate, defined as the number of moles of active principle intercalated and/or absorbed onto 1 mole of the inorganic component, PM is the molecular weight (g/mol) of the active principle, PF is the formula weight (g/mol) of the inorganic component comprising the active principle.

**Patentansprüche**

1. Verwendung eines polymeren Materials, das enthält i) eine polymere Matrix; (ii) eine anorganische Komponente, die innerhalb der Matrix dispergiert ist und durch eine lamellare Struktur mit einer neutralisierten positiven oder negativen Netz-Ladung charakterisiert ist, die geeignet ist, innerhalb der lamellaren Struktur ein aktives Prinzip (iii) einzufügen,

wobei das aktive Prinzip eine Bindung ionischer Art mit der anorganischen Komponente einrichtet, wobei die Kombination der anorganischen Komponente (ii) und des aktiven Prinzips (iii) eine Einfügungszusammensetzung bilden, und die anorganische Komponente aus Hydrotalciten des Mg-Al oder Zn-Al Typs mit einem molaren Verhältnis von Mg(Zn)/Al, das on 1,5 bis 4 variiert, und einer anionischen Austauschkapazität besteht, die von 2 bis 5 mequiv/g variiert,

auf dem Gebiet der Lebensmittelverpackung, insbesondere in aktiven Lebensmittelverpackungen.

2. Verwendung nach Anspruch 1, wobei die polymere Matrix wenigstens eines aus den synthetischen, biologisch abbaubaren oder biologisch kompatiblen synthetischen oder natürlichen Polymeren enthält, die zu den folgenden Klassen gehören: Polyethylen-Glykole, Polycaprolactone und Polyester, Polyactide, Polyanhydride, Polyvinylpyrrolidone, Polyurethane, Polysiloxane, Polyamminosäuren, Polyacrylate und Polymethacrylate, Polyamide, Polyimide, Polyaniline, Polyacrylonitrile, Silikone, Polyetherketone, Polyether-Ether-Ketone, hoch und niedrig dichte Polyethylene, Polypropylene, Polystyrene; natürliche Polymere, wie Polysaccharide, im Allgemeinen Amide, Zellulosen, Chitine, Chitosane, Pektine, Gelatinen; verwendet einzeln oder in einer Mischung davon, möglicherweise funktionalisiert und möglicherweise teilweise oder vollständig vernetzt.

3. Verwendung nach Anspruch 1 oder 2, wobei das polymere Material 50 bis 99 Gewichts-% der Polymermatrix und 1 bis 50 Gewichts-% der anorganischen Komponente enthält.

4. Verwendung nach wenigstens einem der vorhergehenden Ansprüche, wobei das synthetische Hydrotalcit in der Form von mikrokristallinem Pulver mit Größen im Bereich von 0,01-100 $\mu$m ist.

5. Verwendung nach wenigstens einem der vorhergehenden Ansprüche, wobei das aktive Prinzip ausgewählt ist aus Medikamenten und anionischem Typ.

6. Verwendung nach Anspruch 5, wobei die Qualität des aktiven Prinzips (iii) vergleichen mit der anorganischen Komponente den folgenden Ausdruck verifiziert:

$$\text{Aufladung (g/g)} = \alpha \times PM/(PF + \alpha \times PM)$$

worin $\alpha$ die Einfügungsrate ist, definiert als die Anzahl von Molekülen des aktiven Prinzips eingefügt und/oder absorbiert auf 1 Mol der anorganischen Komponente, PM das Molekulargewicht (g/mol) des aktiven Prinzips ist, PF das Formelgewicht (g/mol) der anorganischen Komponente ist, die das aktive Prinzip enthält.

**Revendications**

1. Utilisation d'un matériau polymère comprenant : (i) une matrice polymère ; (ii) un composant inorganique dispersé à l'intérieur de ladite matrice et **caractérisé par** une structure lamellaire avec une charge nette neutralisée positive ou négative capable d'intercaler dans ladite structure lamellaire un principe actif (iii),

   ledit principe actif établissant une liaison de type ionique avec le composant inorganique, la combinaison du composant inorganique (ii) et du principe actif (iii) constituant un composé d'intercalation, et
   ledit composant inorganique consistant en des hydro-talcites synthétiques du type Mg-Al ou Zn-Al avec un rapport molaire Mg(Zn)/Al qui varie de 1,5 à 4 et avec une capacité d'échange anionique qui varie de 2 à 5 mequiv/g

   dans le domaine de l'emballage alimentaire, en particulier dans l'emballage alimentaire actif.

2. Utilisation selon la revendication 1, dans laquelle la matrice polymère comprend au moins un des polymères parmi les polymères naturels ou synthétiques, biodégradables ou biocompatibles appartenant aux classes suivantes : glycols de polyéthylène, poly-caprolactones et polyesters, polylactides, poly-anhydrides, poly-vinylpyrrolidones, polyuréthanes, poly-siloxanes, poly-amminoacides, polyacrylates et poly-méthacrylates, polyamides, poly-imides, poly-anilines, poly-acrylonitriles, silicones, polyéther-cétones, polyéther-éther-cétones, polyéthylènes de forte et basse densité, polypropylènes, polystyrènes ; des polymères naturels comme des polysaccharides en général, des amides, des celluloses, des chitines, des chitosanes, des pectines, des gélatines ; pris individuellement ou en mélange, possiblement fonctionnalisés et possiblement en partie ou totalement réticulés.

3. Utilisation selon l'une des revendications 1 et 2, dans laquelle ledit matériau polymère contient 50-99 % en poids de matrice polymère et 1-50 % en poids de composant inorganique.

4. Utilisation selon au moins l'une des revendications précédentes, dans laquelle l'hydro-talcite synthétique est sous la forme de poudre microcristalline avec des dimensions comprises entre environ 0,01 $\mu$m et 100 $\mu$m.

5. Utilisation selon au moins l'une des revendications précédentes, dans laquelle ledit principe actif est choisi parmi des médicaments de type anionique.

6. Utilisation selon la revendication 5, selon laquelle la quantité de dit principe actif (iii), comparé au composé inorganique, vérifie l'expression suivante :

$$\text{Charge (g/g)} = \alpha \times PM/(PF + \alpha \times PM)$$

où $\alpha$ est le taux d'intercalation, défini comme le nombre de moles du principe actif intercalées et/ou absorbées par mole du composant inorganique, PM est la masse moléculaire (g/mol) du principe actif, PF est la masse molaire (g/mol) du composant inorganique comprenant le principe actif.

Fig. 1 – Release of Ascorbic acid anchored to the hydrotalcyte and mechanically mixed to the PCL (System) and Ascorbic acid mechanically mixed to the (Mixed) PCL

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5466462 A

- WO 2004098574 A

**Non-patent literature cited in the description**

- *AAPS Pharm. Sci. Tech.,* 2002, vol. 3 (3
- *Int. J. of Pharmaceutics,* 2001, vol. 220, 23-32
- Comprehensive Supramolecular Chemistry. Pergamon Press, 1996, vol. VII
- *AAPS Pharm. Sci. Tech.,* 2002, vol. 3 (3), 26
- **F. CAVANI ; F. TRIFIRÒ ; A. VACCARI.** *Catal. Today,* 1991, vol. 11, 173

- **MICHAEL ALEXANDRE ; PHILIPPE DUBOIS.** *Materials Science and Engineering,* 2000, vol. 28, 1-63
- **SORRENTINO ; ANDREA ; GORRASI ; GIULIANA ; TORTORA ; MARIAROSARIA ; VITTORIA ; VITTORIA ; COSTANTINO ; UMBERTO.** *Polymer Volume,* 2005, vol. 46, 1601-1608